# EUROPEAN PATENT SPECIFICATION

(11) **EP 3 252 332 B1**
(45) Date of publication and mention of the grant of the patent: **26.02.2020**
(21) Application number: 16172803.5
(22) Date of filing: 03.06.2016
(51) Int. Cl.: F16D 21/06, B60K 6/20

(54) **MOTOR-VEHICLE TRANSMISSION WITH A DOUBLE CLUTCH COUPLING DEVICE**
KRAFTFAHRZEUGGETRIEBE MIT DOPPELKUPPLUNGSMECHANISMUSVORRICHTUNG
TRANSMISSION DE VÉHICULE À MOTEUR AVEC UN DISPOSITIF D'ACCOUPLEMENT À DOUBLE EMBRAYAGE

(43) Date of publication of application: 06.12.2017
(73) Proprietor: FCA Italy S.p.A., 10135 Torino (IT)
(72) Inventor: DI MARTINO, Alessandro, 81043 Capua (Caserta) (IT); CONSANI, Marco, I-10135 Torino (IT); PREGNOLATO, Gianluigi, I-10135 Torino (IT); PIACENZA, Gianni, I-10135 Torino (IT)
(74) Representative: Notaro, Giancarlo

(56) References cited:
- DE-A1-102015 213 874
- FR-A1- 2 814 517
- US-A1- 2010 326 785

## Description

### Field of the invention

The present invention relates to a motor-vehicle transmission with a double clutch coupling device, of the type comprising:
- a main supporting structure,
- an inlet rotating member, which is to be driven by a motor-vehicle internal combustion engine, said inlet rotating member being rotatably supported around a main axis by said main supporting structure,
- a first and a second primary shafts, which are coaxial and concentric with each other and rotatably supported around sad main axis by said main supporting structure, and
- a first and a second clutch couplings, respectively for connecting said first and second primary shafts to said inlet rotating member.

### Prior art

An exemplary transmission of the above indicated type is disclosed in EP 1 245 863 A2. In the case of this known solution, said two clutch couplings are dry-type couplings. However, transmissions of the above indicated type are also known (see for example DE 10 2006 040 506 A1) which have wet-type couplings, with multiple plates immersed within a lubricating fluid which fulfils a cooling function. Wet-type clutches are able of supporting major thermal stresses and have the advantage of a more reduced radial dimension with respect to dry-type clutches.

In a mass production, it may be advantageous to provide flexible production lines, which are able to obtain basically the same model of transmission both in a version with dry-type clutches, and in a version with wet-type clutches. However, this problem is not easy to be solved, since generally the two different types of clutch require providing different structures of the transmission and primary shafts with different configurations.

A transmission of the type indicated in the preamble of claim 1 is known from DE 10 2015 213874 A1. Similar transmissions are known from FR 2 814 517 A1 and US 2010/326785 A1.

### Object of the invention

An object of the present invention is that of providing a transmission of the above indicated type, which has wet-type clutch couplings and which can be obtained from a transmission of the dry-type with minimum variations in the general configuration of the transmission and the primary shafts, so as to render the provision possible of single flexible production lines for manufacturing the two types of transmission.

A further important object of the invention is that of providing a transmission of the above indicated type, having wet-type clutch couplings, which is simple and inexpensive to manufacture.

Yet another object of the invention is that of providing a transmission of the above indicated type, having wet-type clutch couplings, which is particularly adapted to be used in a hybrid power system, including an electrical machine associated with the transmission.

### Summary of the invention

In view of achieving the above indicated objects, the present invention provides a motor-vehicle transmission having the featuresof claim 1.

Due to the above indicated features, the transmission according to the present invention can be obtained from a dry-type transmission with minimum variations in the general configuration of the transmission and the primary shafts. The outer housing of the transmission can be constituted by the housing of the double clutch coupling device in its dry-type version. In modifying this transmission into a wet-type transmission, the inner housing which is necessary for defining the sealed chamber containing the multiple plate couplings can be provided in a simple and easy manner since it is carried by a flange which supports the above mentioned annular hydraulic cylinder CSC, which flange can be interposed between the housing of the double clutch device and the casing of the gear change.

In a first version of a preferred embodiment, the wheels carrying said second sets of plates of the two clutch couplings are connected to be rotatable with the respective primary shafts, but are axially movable relative thereto. These wheels are adapted to be axially displaced by said fluid actuator members for bringing the respective couplings into an engaged condition. In this embodiment, preferably, a plurality of springs are provided which are common to the two clutch couplings and are interposed between the wheels carrying said second sets of plates of the two clutch couplings. These springs bias said wheels towards a respective rest position.

In a second version of the preferred embodiment, to each clutch coupling there is associated at least one respective spring which bias the coupling towards the rest disengaged condition. Preferably, the wheels carrying said second sets of plates of the two clutch couplings are connected in rotation with the respective primary shafts at positions which are axially substantially fixed relative to the shafts. The fluid actuator members actuate respective pusher members for pressing axially the plates of the respective clutch coupling against each other and against an abutment carried by the rotating bell-like member. The plates are axially slidable relative to their respective supporting wheel and relative to the bell-like member. Also preferably, in this case each of said pusher members is in form of an annular piston, rotating with the bell-like member, and biased towards a rest position by a spring member, preferably of the belleville type. The belleville spring is arranged coaxially around the primary shafts and is operatively interposed between the respective piston and the rotating bell-like member.

In a particularly important variant, between the outer housing and the inner housing of the transmission, there is defined an annular space in which an electric machine with an annular configuration is received. The electric machine has a rotor rotatably supported around said main axis. The transmission further includes a clutch coupling for connecting said inlet rotating member with the rotor of the electric machine.

Due to these features, the transmission according to the invention enables a hybrid power system to be obtained in a simple manner, the system including an electric machine which is adapted to operate both as a generator and as a motor, without increasing in the axial dimension of the entire unit.

### Detailed description of preferred embodiments

Further features and advantages of the invention will become apparent from the description which follows with reference to the annexed drawings, given purely by way of non limiting example, in which:
- figure 1 is a view in cross-section of a first embodiment of the transmission according to the invention,
- figure 2 is a diagrammatic representation of the transmission of figure 1,
- figures 3 and 4 are progressive enlargements of details of figure 1,
- figure 5 shows the transmission of figure 1 in a version in which also an electric machine is associated to the transmission,
- figure 6 is a view in cross-section of a detail of the transmission, according to a second embodiment of the invention,
- figure 7 is a diagrammatic representation of the second embodiment of the transmission according to the invention,
- figure 8 is a variant of figure 6, and
- figure 9 is a variant of figure 4.

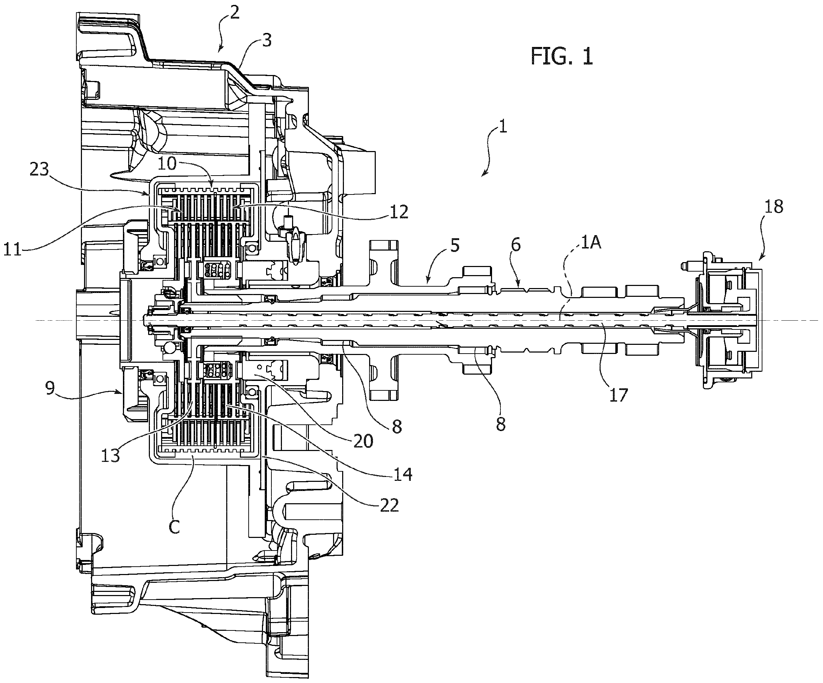

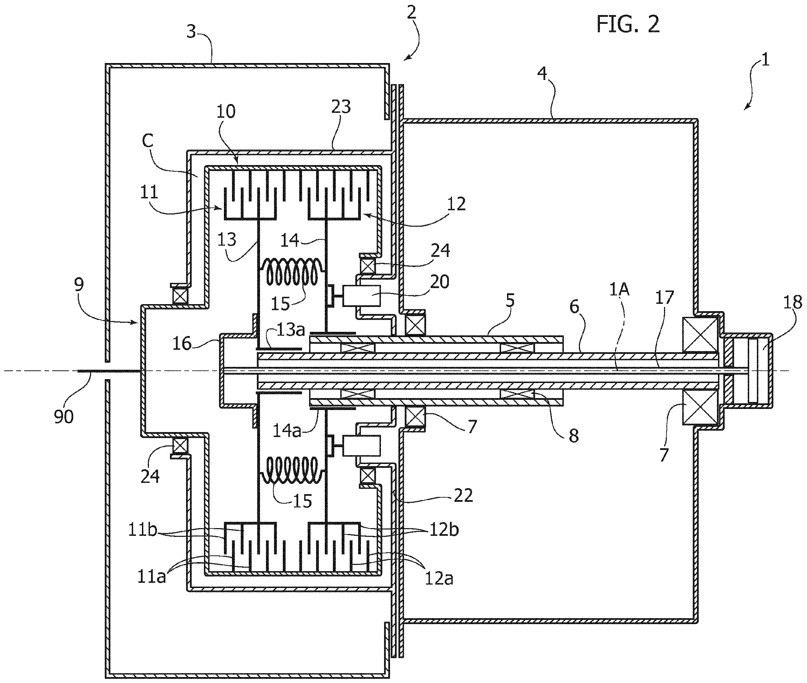

With reference initially to figures 1, 2, numeral 1 generally designates a motor-vehicle transmission with a double clutch coupling device. The transmission 1 comprises a main supporting structure 2, including a housing 3 of the double clutch coupling device and a casing 4 of the motor-vehicle gear change (which is shown only in figure 2, diagrammatically).

In the drawings, the parts of the motor-vehicle gear change have not been illustrated, both because they can be made in any known way, and because their deletion from the drawings render the latter simpler and easier to understand. By way of example, the gear change may be of the type disclosed in EP 1 245 863 A2 assigned to a brother company of the Applicant. In any case the gear change is of a type comprising a first and second primary shafts 5, 6 which are coaxial and concentric with each other and rotatably supported, independently from each other, by the casing 4 of the gear change, by means of rolling bearings 7 (see figure 2). Rolling bearings 8 are also interposed between the inner primary shaft 6 and the outer primary shaft 5.

Within the housing 3 of the clutch unit there is rotatably mounted around the main axis 1A an inlet rotating member 9 which is driven in rotation by the shaft 90 (partially shown in figure 2) of the internal combustion engine of the motor-vehicle.

With reference in particular to figure 2, the inlet rotating member 9 is connected in rotation to a bell-like member of a double clutch coupling device, including two clutch couplings 11, 12, having multiple disks and adapted to be selectively actuated for connecting in rotation the inlet rotating member 9 to the inner primary shaft 6 or the outer primary shaft 5.

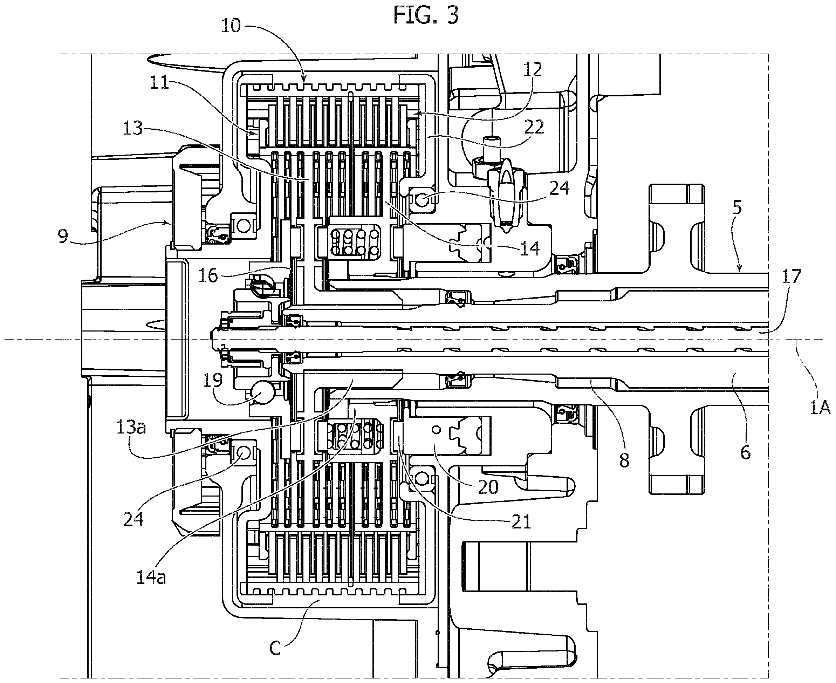

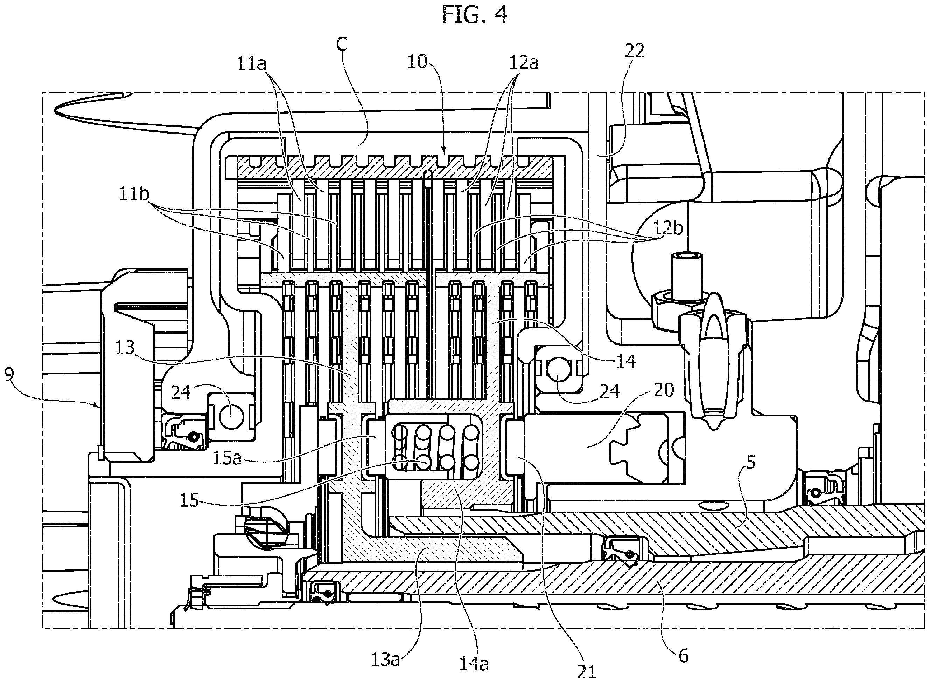

With reference to figure 2, as well as in great detail to figures 3, 4, the clutch coupling 11 comprises a first set of annular plates 11a carried by the circumferential wall of the bell-like member 10 and projecting inside thereof. The plates 11a cooperate with a second set of annular plates 11b carried by the outer periphery of a wheel 13. Te wheel 13 has a hub 13a (see in particular figure 4) which is mounted through a flutted coupling on one end of the inner primary shaft 6, so as to be connected in rotation to shaft 6 while being axially movable relative to shaft 6.

Similarly, the clutch coupling 12 comprises a first set of annular plates 12a carried by the bell-like member 10, and a second set of plates 12b carried by the outer periphery of a wheel 14. The wheel 14 has a hub 14a which is mounted through a flutted coupling on one end of the outer primary shaft 5.

With reference to figure 2, each of the two wheels 13, 14 of the two coupling devices 11, 12 is adapted to be axially displaced from a rest position, in which the respective plates 11b, 12b are spaced from plates 11a, 12a, and an operative position, in which said plates are pressed against each other so as to become mutually coupled in rotation by friction.

When the wheel 13 of the coupling 11 is in its rest position, the coupling is in an opened condition and the rotation of the bell-like member 10 is not transmitted to the inner primary shaft 6. When the wheel 13 is in its operative position, the rotation of the bell-like member 10 is transmitted to wheel 13 and from the latter, through hub 13a, to the inner primary shaft 6.

Similarly, when the clutch coupling 12 has its wheel 14 in its rest position, the clutch coupling is in an opened condition, in which the rotation of the bell-like member 10 is not transmitted to the outer primary shaft 5, whereas when the wheel 14 is in its operative position, the rotation is transmitted by the bell-like member 10 to the wheel 14 and by the latter to the outer primary shaft 5 through hub 14a.

In the embodiment of figures 1-4, wheels 13, 14 are biased towards the respective rest axial positions by an annular arrangement of helical springs 15 which are directly interposed between wheels 13, 14. Therefore, in this solution the springs are common to the two clutch couplings.

With reference in particular to figure 4, in the actual embodiment, each spring 15 is received within a cavity formed in the body of wheel 14. One end of spring 15 rests against the bottom of this cavity, whereas the opposite end engages the wheel 13 with the interposition of a rolling axial bearing 15a.

According to a technique known per se (see for example EP 1 245 863 A2) the wheel 13 of the clutch coupling 11 can be displaced from its rest position to its operative position, against the action of springs, by a pusher member 16 which is actuated, through a tie-rod 17 which is arranged through the entire length of the inner primary shaft 6, by a fluid cylinder 18 carried by the casing 4 of the gear change at the opposite end of the transmission. As visible in figures 3, 4, one end of the tie-road 17 is connected to the pusher member 16 through a rolling bearing 19. Similarly, the opposite end of the tie-rod 17 is connected to the piston of the actuating cylinder 18 through a rolling bearing 18a (see figure 1).

The wheel 14 of the clutch coupling 12 can be displaced axially from its rest position to its active position, against the action of the springs 15, by an annular hydraulic cylinder of the CSC (Concentric Slave Cylinder) type, designated by reference numeral 20. The annular cylinder 20 has an annular movable member in contact with wheel 14 with the interposition of a rolling axial bearing 21 (see figures 3, 4).

Although the two wheels 13, 14 have common return springs, the actuation of one coupling has no influence in practise on the other. The mutual influence which may exist for the intermediate positions of the two wheels, is rendered to be negligible by a suitable dimensioning of the springs, so that during actuation, the increase in the axial load due to the compression of the spring is negligible. When the wheel 13 is pushed axially by the pusher member 16, springs 15 are pressed against wheel 14, which cannot move rearwardly since it is in contact with the movable part of cylinder 20, which is at its rear most position. Similarly, when wheel 14 is pushed axially by the annular cylinder 20, the springs 15 are compressed against wheel 13, which cannot move rearwardly, since it is in contact with the pusher member 16, which is at its rear most position.

With reference to figures 2-4, the annular cylinder 20 is carried by an annular flange 22 which surrounds the primary shafts 5, 6 and is rigidly connected to the supporting structure 2, at a position interposed between the housing 3 of the clutch and the casing 4 of the gear change. Also with reference to figures 1-3, flange 22 which supports the annular cylinder 20 also supports an inner housing 23 which completely surrounds the double clutch coupling device and rotatably supports the bell-like member 10 by rolling bearings 24.

The inner housing 23 defines a sealed closed chamber C containing a lubricating fluid with cooling function and within which the plates of the clutch couplings 11, 12 are immersed. According to a technique known per se, the fluid-containing chamber forms part of a fluid circuit including a reservoir and a pump for activating the fluid circulation, as well as a heat exchanger for cooling the fluid. The pump and the heat exchanger, in the case of the illustrated embodiment, are provided outside the housing 2 of the transmission.

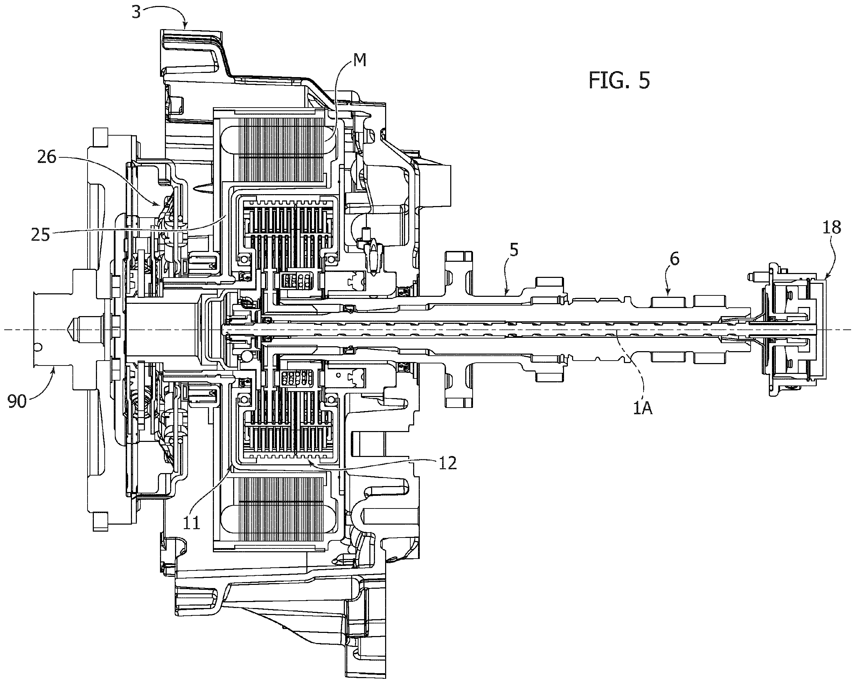

As clearly evident from the drawings, in the exemplary embodiment which is illustrated the two clutch coupling devices 11, 12 have substantially identical radio dimensions and are at axially adjacent positions. Due to this feature, between the outer housing 3 and the inner housing 23 there is defined a free annular space with relatively large dimensions. This space may be advantageously used for receiving an electric machine with annular configuration (see figure 5) if a hybrid transmission system is desired, having an internal combustion engine and an electric machine associated to the transmission, which can act both as an electric generator and as a motor.

In the example shown in figure 5, the electric machine (designated by reference M) has a rotor carried by a wheel 25 which is rotatably supported by the housing 3 of the clutch and can be connected in rotation to an inlet rotating member 90 by means of a dry-type clutch coupling 26. The details of construction of the coupling 26 are not disclosed herein, since they can be made in any known way and also because these details, taken alone, do not fall within the scope of the present invention.

As it will become readily apparent from the foregoing description, the above described transmission has a configuration such that it can be derived from a similar transmission having a dry-type double clutch coupling device, without any substantial modifications to the general structure of the transmission and the structure of the primary shafts. In the case of a transmission with dry-type clutch couplings, the housing 3 has dimensions suitable for containing the dry couplings. At the same time, if the transmission according to the invention is to be obtained, the inner housing 23 which is necessary for defining the sealed closed chamber within the multiple disk couplings 11, 12 are arranged, can be mounted in a simple and rapid manner, since it constitutes a single unit with the flange 22 supporting the annular cylinder 24, this flange being adapted to be inserted between the clutch housing and the casing of the gear change.

The configuration of the above described transmission thus enables a same flexible production line to be arranged easily, which can be adapted to the manufacture of both versions of the transmission.

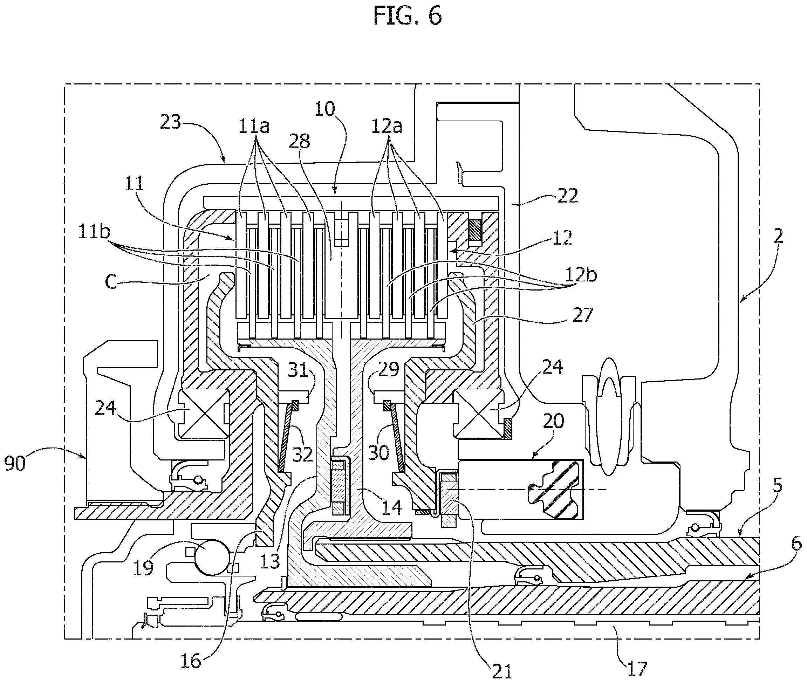

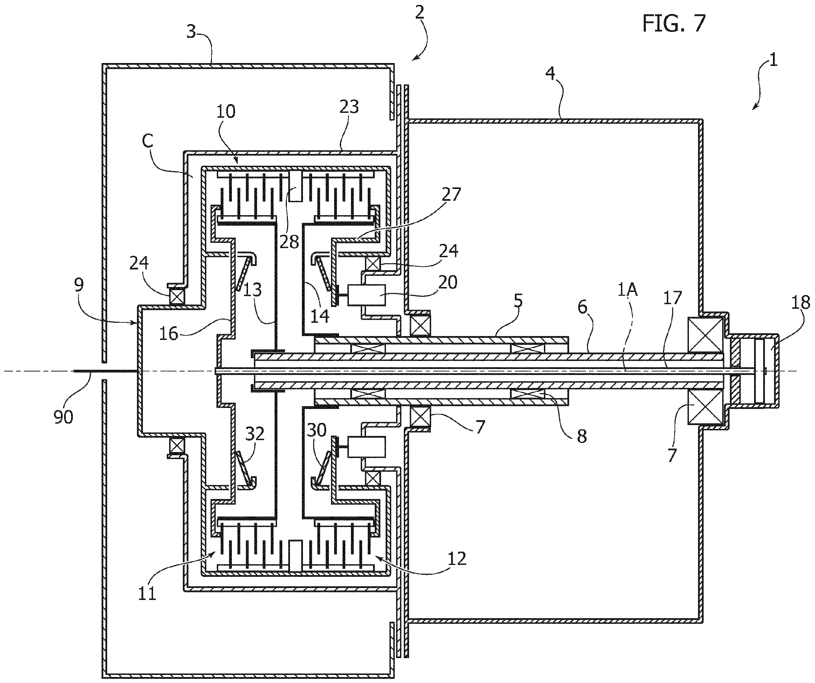

Figures 6, 7 refer to a second embodiment. In these figures parts in common with those of figures 1-4 are designated with the same reference numerals.

The main difference with respect to the above described first embodiment lies in that in the case of the embodiment of figures 6, 7, the two wheels 13, 14 which are connected in rotation with the inner primary shaft 6 and the outer primary shaft 5 are at positions which are substantially fixed axially relative to these shafts (this position being selected so as to minimize any tensions which might arise between the plates and the respective hub during actuation of the clutch); the two wheels carry annular plates 11b and 12b which are slidably mounted on an outer skirt of the respective wheel. Similarly, the annular pates 11a and 12a of couplings, 11, 12, which are carried by the bell-like member 10, are slidably mounted with respect to the circumferential wall of the bell-like member 10. The annular actuator cylinder 24 is adapted to actuate an annular piston 27 with the interposition of the rolling axial bearing 21; the annular piston 27 is adapted to engage the sets of plates 12a, 12b so as to press them against each other and against an abutment 28 carried by the bell-like member 10. Piston 27 is axially movable within a guide 29 defined by a projection of the corresponding front wall of the bell-like member 10. An annular spring 30, preferably of the belleville type is interposed between piston 27 and a spring clip carried by the projection defining the guide 29, for biassing piston 27 towards its rest position. When the annular actuator cylinder 20 is activated, it pushes the rotating piston 27, against the action of the belleville spring 30, so as to press plates 12a, 12b of the clutch coupling 12 axially against each other and against the abutment 28, for connecting in rotation the bell-like member 10 to the wheel 14, whose hub is rigidly connected to the outer primary shaft 5. Similarly, the pusher member 16 adapted to be actuated by the tie rod 17 in this case is in the form of an annular piston adapted to engage the sets of plates 11a, 11b for pressing them axially against each other and against the abutment 28 carried by the bell-like member 10. The piston 16 is preferably also guided axially within a guide 31 defined by a projection of the corresponding front wall of the bell-like member 10. Alternatively, a guide can be provided only in order to limit any bending of the primary shafts, thus fulfilling also a function which in conventional systems is ensured by a pilot element adapted to rest in a cavity at one end of the engine shaft.

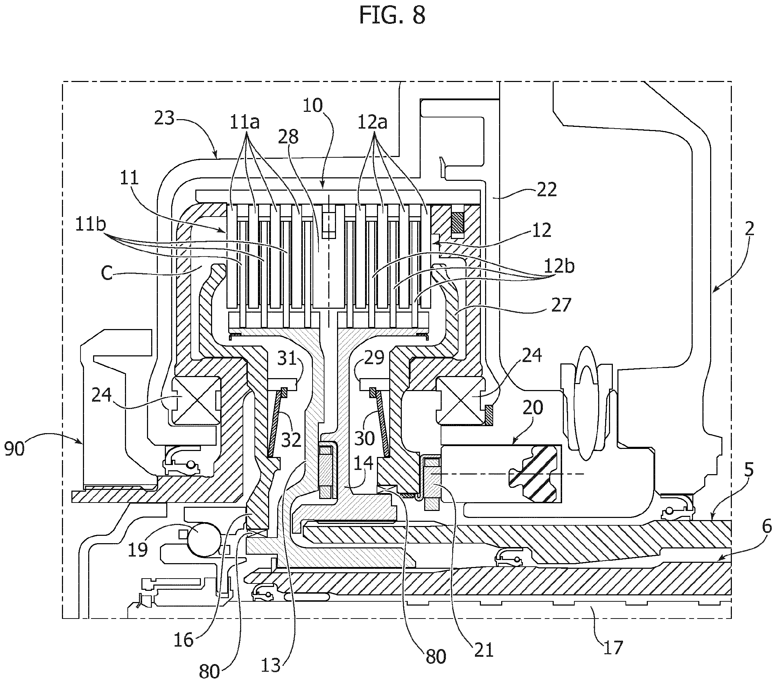

One or both the pistons 16, 27 can be guided, it is necessary with the interposition of needle bearings 80, or friction bushings, on the respective hubs of wheels 13, 14 as shown in figure 8.

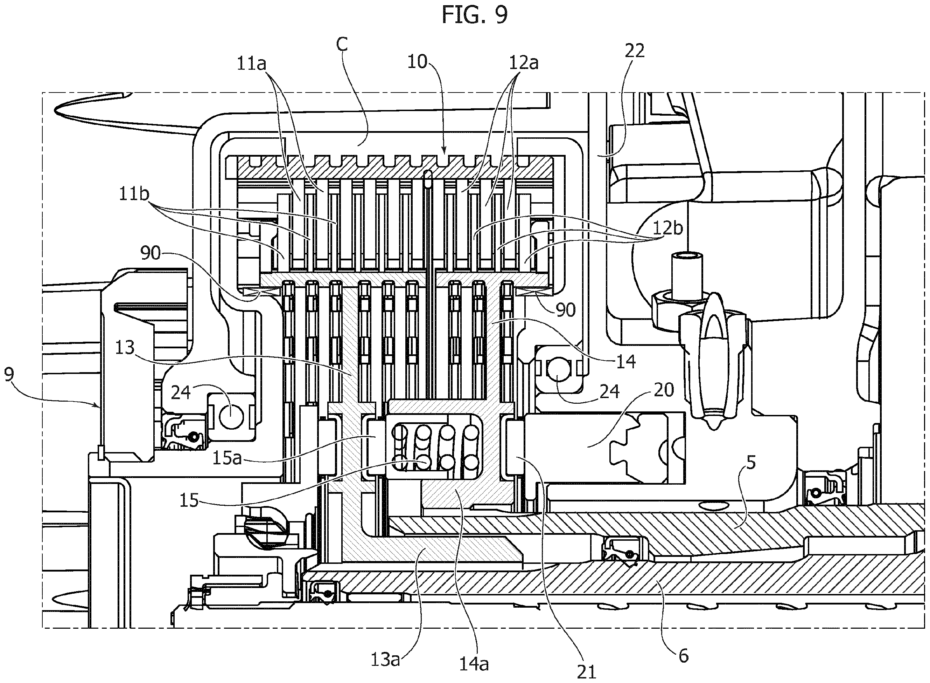

A similar arrangement can be also provided for the first embodiment which has been described in the foregoing with reference to figures 1-4; in this case the outer skirts of wheels 13 and 14 can be guided on respective cylindrical portions of the inner surface of the bell-like member 10, through needle bearings 90 or friction bushings (figure 9).

An annular spring 32, preferably of the belleville type, is interposed between piston 16 and a spring clip mounted on the projection defining guide 31 for biasing piston 16 towards its rest position. When the actuator cylinder 18 is actuated, the tie-rod 17 moves piston 16 against the action of belleville spring 32 to the engagement position in which it presses axially plates 11a, 11b against each other and against abutment 28. In this condition, the rotation of the bell-like member 10 is transmitted to wheel 13, whose hub is rigidly connected to the inner primary shaft 6. As shown, therefore in this case each of the two clutch couplings 11, 12 is provided with a respective spring 32, 30 which biases the coupling towards the opened condition. But the substantial difference with respect to the first embodiment described above lies above all in that this case the part on which the plates are guided is separated with respect to the piston which is adapted to press them against each other and against the respective abutment. This architecture is favourable for containing wear of the flutted couplings of the hubs carrying the driving plates.

Also in the case of the second embodiment, the annular space comprise between the outer housing 3 and the inner housing 23 can be used for receiving an electric machine M, such as shown in figure 5.

Naturally, while the principle of the invention remains the same, the details of construction and the embodiments may widely vary with respect to what has been described and illustrated purely by way of example, without departing from the scope of the present invention.

## Claims

1. Motor-vehicle transmission with double clutch coupling device, comprising:
- a main supporting structure (2),
- an inlet rotating member (9), which is to be driven by a motor-vehicle internal combustion engine, said inlet rotating member (9) being rotatably supported around a main axis (1A) by said main supporting structure (2),
- a first and second primary shafts (5, 6) which are coaxial and concentric with each other and are rotatably supported around said main axis (1A) by said main supporting structure (2),
- a first and a second clutch couplings (11, 12), respectively for connecting a first and a second primary shafts (5, 6) to said inlet rotating member (9),
- and wherein:
- the main supporting structure (2) includes an outer housing (3) which is to be interposed between the structure of the internal combustion engine and the casing (4) of the motor-vehicle gear change,
- said first and second clutch couplings (11, 12) are multiple plate couplings arranged in a closed sealed chamber (C) defined within said inner housing (23) and containing a cooling lubricant fluid,
- each of said multiple plate couplings (11, 12) comprises:
- a rotating bell-like member (10) rotatably supported and connected to said inlet rotating member (9),
- a first set of plates (11a, 12a) carried by said rotating bell-like member (10) and a second set of plates (11b, 12b) carried by a wheel (13, 14) connected in rotation to a respective one of said primary shafts (5, 6),
- at least one spring for biasing the coupling (11, 12) towards a rest disengaged position,
- a fluid actuator member (18, 20) is provided for each clutch coupling (11, 12),
- at least one of said fluid actuator members is an annular hydraulic cylinder (20) coaxially mounted around said primary shafts (5, 6) and supported by an annular flange (22) secured to said main supporting structure (2) around said primary shafts (5, 6),
- said two clutch couplings (11, 12) have a common rotating bell-like member (10), they have substantially identical radial dimensions and are arranged at axially adjacent positions,
said transmission being **characterized in that**:
- said flange (22) which supports said annular hydraulic cylinder (20) is interposed between said outer housing (3) and said casing (4) of the motor-vehicle gear change,
- said outer housing (3) contains an inner housing (23), within which said common bell-like member (10) is rotatably supported,
- said inner housing (23) is supported by said main supporting structure (2) by being carried by said flange (22) which supports said annular hydraulic cylinder (20),
- said common rotating bell-like member (10) is rotatably supported by rolling bearings (24) carried by said inner housing (23) which is carried by said flange (22).

2. Transmission according to claim 1, **characterized in that** the wheels (13, 14) carried by the second set of plates (11b, 12b) of the two clutch couplings (11, 12) are connected in rotation with the respective primary shafts (6, 5), while being axially movable relative thereto and are adapted to be axially displaced by said fluid actuator members (18, 20) for bringing the respective couplings (11, 12) to an engaged condition.

3. Transmission according to claim 2, **characterized in that** it comprises a plurality of springs (15) which are common to the two clutch couplings (11, 12) said springs being interposed between said wheels (13, 14) carrying the second set of plates (11b, 12b) of the two clutch couplings (11, 12), so that the springs bias said wheels (13, 14) towards a respective rest position.

4. Transmission according to claim 1, **characterized in that** to each clutch coupling (11, 12) there is associated at least one respective spring (30, 32) which bias the coupling towards the rest disengaged condition.

5. Transmission according to claim 4, **characterized in that** said wheels (13, 14) carrying the second set of plates 11b, 12b of the two clutch couplings (11, 12) are connected in rotation with respective primary shafts (6, 5) at positions substantially fixed axially relative thereto, and **in that** said fluid actuator members (18, 20) are adapted to actuate respective pusher members (16, 27) for pressing axially the plates (11a, 11b; 12a, 12b) of the respective friction coupling (11, 12) against each other and against an abutment (28) carried by the bell-like member (10), said plate being axially slidable relative to the respective supporting wheel (13, 14) and relative to the bell-like member (10).

6. Transmission according to claim 5, **characterized in that** each of said pusher members (16, 27) is in the form of an annular piston rotating with the bell-like member (10) of the respective coupling (11, 12) and biased towards a rest position by an annular spring (30, 32) arranged coaxially around the primary shafts (5, 6) and operatively interposed between the respective rotating piston (16, 27) and the rotating bell-like member (10).

7. Transmission according to claim 6, **characterized in that** one or both of the pistons (16, 27) are guided on the hubs of said wheels (13, 14) carrying the second set of plates (11b, 12b).

8. Transmission according to any of the previous claims, **characterized in that** between the outer housing (3) and the inner housing (23) is defined an annular space in which an electric machine (M) having an annular configuration is received.

9. Transmission according to claim 8, **characterized in that** the electric machine (M) has a rotor rotatably supported around said main axis and **in that** the transmission further includes a clutch coupling (26) for the connection of said inlet rotating member (9) to the rotor (25) of the electric machine (M).

## Patentansprüche

1. Kraftfahrzeuggetriebe mit Doppelkupplungsvorrichtung, die umfasst:
- eine Haupt-Lagerungsstruktur (2),
- ein Einlass-Drehelement (9), das von einem Kraftfahrzeug-Verbrennungsmotor angetrieben wird, wobei das Einlass-Drehelement (9) über die Haupt-Lagerungsstruktur (2) um eine Hauptachse (1A) herum drehbar gelagert ist,
- eine erste und eine zweite Primärwelle (5, 6), die koaxial und konzentrisch zueinander sind und über die Haupt-Lagerungsstruktur (2) um eine Hauptachse (1A) herum drehbar gelagert sind,
- eine erste und eine zweite Kupplung (11, 12), jeweils zum Verbinden einer ersten und einer zweiten Primärwelle (5, 6) mit dem Einlass-Drehelement (9),
- und wobei:
- die Haupt-Lagerungsstruktur (2) ein Außengehäuse (3) enthält, das zwischen die Struktur des Verbrennungsmotors und die Verkleidung (4) der Kraftfahrzeug-Gangschaltung eingesetzt wird,
- die erste und die zweite Kupplung (11, 12) Mehrscheibenkupplungen sind, die in einer geschlossenen abgedichteten Kammer (C) angeordnet sind, die im Inneren des Innengehäuses (23) definiert ist und eine kühlende Schmierflüssigkeit enthält,
- jede der Mehrscheibenkupplungen (11, 12) umfasst:
- ein rotierendes glockenartiges Element (10), das drehbar gelagert und mit dem Einlass-Drehelement (9) verbunden ist,
- einen ersten Satz von Platten (11a, 12a), die von dem rotierenden glockenartigen Element (10) getragen werden, sowie einen zweiten Satz von Platten (11b, 12b), die von einem Rad (13, 14) getragen werden, das zur Drehung mit einer entsprechenden der Primärwellen (5, 6) verbunden ist,
- wenigstens eine Feder, mit der die Kupplung (11, 12) in Richtung einer ausgerückten Ruheposition gespannt wird,
- wobei ein Fluid-Stellglied (18, 20) für jede Kupplung (11, 12) vorhanden ist,
- wenigstens eines der Fluid-Stellglieder ein ringförmiger Hydraulikzylinder (20) ist, der koaxial um die Primärwellen (5, 6) herum montiert ist, und über einen ringförmigen Flansch (22) gelagert ist, der an der Haupt-Lagerungsstruktur (2) um die Primärwellen (5, 6) herum befestigt ist,
- die beiden Kupplungen (11, 12) ein gemeinsames rotierendes glockenartiges Element (10) aufweisen, sie im Wesentlichen identische radiale Abmessungen aufweisen und an axial benachbarten Positionen angeordnet sind,
wobei das Getriebe **dadurch gekennzeichnet ist, dass**:
- der Flansch (22), der den ringförmigen Hydraulikzylinder (20) lagert, zwischen dem äußeren Gehäuse (3) und der Verkleidung (4) der Kraftfahrzeug-Gangschaltung angeordnet ist,
- das Außengehäuse (3) ein Innengehäuse (23) einschließt, in dessen Innerem das gemeinsame glockenförmige Element (10) drehbar gelagert ist,
- das innere Gehäuse (23) über die Haupt-Lagerungsstruktur (2) gelagert ist, indem es von dem Flansch (22) getragen wird, der den ringförmigen Hydraulikzylinder (20) lagert,
- das gemeinsame rotierende glockenartige Element (10) über Wälzlager (24) drehbar gelagert ist, die von dem Innengehäuse (23) getragen werden, das von dem Flansch (22) getragen wird.

2. Getriebe nach Anspruch 1, **dadurch gekennzeichnet, dass** die von dem zweiten Satz von Platten (11b, 12b) der zwei Kupplungen (11, 12) getragenen Räder (13, 14) mit den jeweiligen Primärwellen (6, 5) zur Drehung verbunden sind und dabei relativ zu ihnen axial bewegt werden können, und so eingerichtet sind, dass sie von den Fluid-Stellgliedern (18, 20) axial verschoben werden, um die jeweiligen Kupplungen (11, 12) in einen eingerückten Zustand zu bringen.

3. Getriebe nach Anspruch 2, **dadurch gekennzeichnet, dass** es eine Vielzahl von Federn (15) umfasst, die die beiden Kupplungen (11, 12) gemeinsam haben, wobei die Federn zwischen den Rädern (13, 14) angeordnet sind, die den zweiten Satz von Platten (11b, 12b) der zwei Kupplungen (11, 12) tragen, so dass die Federn die Räder (13, 14) in Richtung einer jeweiligen Ruheposition spannen.

4. Getriebe nach Anspruch 1, **dadurch gekennzeichnet, dass** mit jeder Kupplung (11, 12) wenigstens eine entsprechende Feder (30, 32) verbunden ist, die die Kupplung in Richtung des ausgerückten Ruhezustandes spannt.

5. Getriebe nach Anspruch 4, **dadurch gekennzeichnet, dass** die Räder (13, 14), die den zweiten Satz von Platten (11b, 12b) der zwei Kupplungen (11, 12) tragen, zur Drehung mit jeweiligen Primärwellen (6, 5) an Positionen verbunden sind, die relativ dazu axial im Wesentlichen fixiert sind, und dass die Fluid-Stellglieder (18, 20) so eingerichtet sind, dass sie jeweilige Schieber-Elemente (16, 27) betätigen, mit denen die Platten (11a,11b; 12a, 12b) der jeweiligen Reibkupplung (11, 12) axial aneinander und an einen Anschlag (28) gedrückt werden, der von dem glockenartigen Element (10) getragen wird, wobei die Platte relativ zu dem jeweiligen lagernden Rad (13, 14) und relativ zu dem glockenartigen Element (10) axial verschoben werden kann.

6. Getriebe nach Anspruch 5, **dadurch gekennzeichnet, dass** jedes der Schieber-Elemente (16, 27) die Form eines Ringkolbens hat, der sich mit dem glockenartigen Element (10) der jeweiligen Kupplung (11, 12) dreht und durch eine ringförmige Feder (30, 32), die koaxial um die Primärwellen (5, 6) herum angeordnet und funktional zwischen dem jeweiligen rotierenden Kolben (16, 27) und dem rotierenden glockenartigen Element (10) angeordnet ist, in Richtung einer Ruheposition gespannt wird.

7. Getriebe nach Anspruch 6, **dadurch gekennzeichnet, dass** eine oder beide der Kolben (16, 27) auf den Naben der Räder (13, 14) geführt werden, die den zweiten Satz von Platten (11b, 12b) tragen.

8. Getriebe nach einem der vorangehenden Ansprüche, **dadurch gekennzeichnet, dass** zwischen dem Außengehäuse (3) und dem Innengehäuse (23) ein Ringraum ausgebildet ist, in dem eine elektrische Maschine (M) mit einer ringförmigen Konstruktion aufgenommen ist.

9. Getriebe nach Anspruch 8, **dadurch gekennzeichnet, dass** die elektrische Maschine (M) einen Rotor aufweist, der um die Hauptachse herum drehbar gelagert ist, und dass das Getriebe des Weiteren eine Kupplung (26) zur Verbindung des Einlass-Drehelementes (9) mit dem Rotor (25) der elektrischen Maschine (M) enthält.

## Revendications

1. Transmission de véhicule automobile à dispositif à double accouplement à griffes, comprenant :
- une structure de support principale (2),
- un élément rotatif d'entrée (9), qui doit être entraîné par un moteur à combustion interne de véhicule automobile, ledit élément rotatif d'entrée (9) étant supporté de manière rotative autour d'un axe principal (1A) par ladite structure de support principale (2),
- des premier et deuxième arbres primaires (5, 6) qui sont coaxiaux et concentriques l'un par rapport à l'autre et qui sont supportés de manière rotative autour dudit axe principal (1A) par ladite structure de support principale (2),
- des premier et deuxième accouplements à griffes (11, 12), respectivement pour relier des premier et deuxième arbres primaires (5, 6) audit élément rotatif d'entrée (9),
- et où :
- la structure de support principale (2) comporte un boîtier externe (3) qui doit être interposé entre la structure du moteur à combustion interne et le carter (4) du dispositif de changement de vitesse de véhicule automobile,
- lesdits premier et deuxième accouplements à griffes (11, 12) sont des accouplements multidisques agencés dans une chambre étanche fermée (C) définie à l'intérieur dudit boîtier interne (23) et contenant un fluide lubrifiant de refroidissement,
- chacun desdits accouplements multidisques (11, 12) comprend :
- un élément rotatif en forme de cloche (10) supporté de manière rotative et relié audit élément rotatif d'entrée (9),
- un premier ensemble de disques (11a,12a) portés par ledit élément rotatif en forme de cloche (10) et un deuxième ensemble de disques (11b, 12b) portés par une roue (13, 14) reliée en rotation à un arbre respectif desdits arbres primaires (5, 6),
- au moins un ressort pour solliciter l'accouplement (11, 12) vers une position désengagée de repos,
- un élément actionneur à fluide (18, 20) est prévu pour chaque accouplement à griffes (11, 12),
- au moins l'un desdits éléments actionneurs à fluide est un vérin hydraulique annulaire (20) monté de manière coaxiale autour desdits arbres primaires (5, 6) et supporté par une bride annulaire (22) fixée à ladite structure de support principale (2) autour desdits arbres primaires (5, 6),
- lesdits deux accouplements à griffes (11, 12) ont un élément rotatif en forme de cloche commun (10), ils ont des dimensions radiales essentiellement identiques et sont agencés à des positions axialement adjacentes,
ladite transmission étant **caractérisée en ce que** :
- ladite bride (22) qui supporte ledit vérin hydraulique annulaire (20) est interposée entre ledit boîtier externe (3) et ledit carter (4) du dispositif de changement de vitesse de véhicule automobile,
- ledit boîtier externe (3) contient un boîtier interne (23), à l'intérieur duquel ledit élément en forme de cloche commun (10) est supporté de manière rotative,
- ledit boîtier interne (23) est supporté par ladite structure de support principale (2) en étant porté par ladite bride (22) qui supporte ledit vérin hydraulique annulaire (20),
- ledit élément rotatif en forme de cloche commun (10) est supporté de manière rotative par des roulements (24) portés par ledit boîtier interne (23) qui est porté par ladite bride (22).

2. Transmission selon la revendication 1, **caractérisée en ce que** les roues (13, 14) portées par le deuxième ensemble de disques (11b, 12b) des deux accouplements à griffes (11, 12) sont reliées en rotation aux arbres primaires respectifs (6, 5), tout en étant axialement mobiles par rapport à ceux-ci et sont adaptées pour être déplacées axialement par lesdits éléments actionneurs à fluide (18, 20) pour amener les accouplements respectifs (11, 12) à un état engagé.

3. Transmission selon la revendication 2, **caractérisée en ce qu'**elle comprend une pluralité de ressorts (15) qui sont communs aux deux accouplements à griffes (11, 12), lesdits ressorts étant interposés entre lesdites roues (13, 14) portant le deuxième ensemble de disques (11b, 12b) des deux accouplements à griffes (11, 12), de sorte que les ressorts sollicitent lesdites roues (13, 14) vers une position de repos respective.

4. Transmission selon la revendication 1, **caractérisée en ce qu'**à chaque accouplement à griffes (11, 12) est associé au moins un ressort respectif (30, 32) qui sollicite l'accouplement vers l'état désengagé de repos.

5. Transmission selon la revendication 4, **caractérisée en ce que** lesdites roues (13, 14) portant le deuxième ensemble de disques (11b, 12b) des deux accouplements à griffes (11, 12) sont reliées en rotation aux arbres primaires respectifs (6, 5) à des positions essentiellement fixes axialement par rapport à ceux-ci, et **en ce que** lesdits éléments actionneurs à fluide (18, 20) sont adaptés pour actionner des éléments poussoirs respectifs (16, 27) pour presser axialement les disques (11a,11b ; 12a, 12b) de l'accouplement à friction respectif (11, 12) les uns contre les autres et contre une butée (28) portée par l'élément en forme de cloche (10), ledit disque pouvant coulisser axialement par rapport à la roue de support respective (13, 14) et par rapport à l'élément en forme de cloche (10).

6. Transmission selon la revendication 5, **caractérisée en ce que** chacun desdits éléments poussoirs (16, 27) se présente sous la forme d'un piston annulaire tournant avec l'élément en forme de cloche (10) de l'accouplement respectif (11, 12) et sollicité vers une position de repos par un ressort annulaire (30, 32) agencé de manière coaxiale autour des arbres primaires (5, 6) et interposé de manière fonctionnelle entre le piston rotatif respectif (16, 27) et l'élément rotatif en forme de cloche (10).

7. Transmission selon la revendication 6, **caractérisée en ce que** l'un et/ou l'autre des pistons (16, 27) est/sont guidé(s) sur les moyeux desdites roues (13, 14) portant le deuxième ensemble de disques (11b, 12b).

8. Transmission selon l'une des revendications précédentes, **caractérisée en ce qu'**entre le boîtier externe (3) et le boîtier interne (23) est défini un espace annulaire dans lequel une machine électrique (M) ayant une configuration annulaire est reçue.

9. Transmission selon la revendication 8, **caractérisée en ce que** la machine électrique (M) a un rotor supporté de manière rotative autour dudit axe principal et **en ce que** la transmission comporte en outre un accouplement à griffes (26) pour la liaison dudit élément rotatif d'entrée (9) avec le rotor (25) de la machine électrique (M).
